# EUROPEAN PATENT SPECIFICATION

(11) **EP 4 435 949 B1**
(45) Date of publication and mention of the grant of the patent: **09.12.2026**
(21) Application number: 23869286.7
(22) Date of filing: 15.08.2023
(51) Int. Cl.: H01M 50/209, H01M 50/147, H01M 50/133, H01M 50/103, H01M 50/249, H01M 10/613, H01M 50/296, H01M 10/625, H01M 10/6551, H01M 10/6554, H01M 10/6556, H01M 50/107, H01M 50/15, H01M 50/152, H01M 50/169, H01M 50/242, H01M 50/289, H01M 50/531, H01M 50/548, H01M 50/553

(54) **BATTERY CELL, BATTERY, AND ELECTRICAL DEVICE**
BATTERIEZELLE, BATTERIE UND ELEKTRISCHE VORRICHTUNG
ÉLÉMENT DE BATTERIE, BATTERIE ET DISPOSITIF ÉLECTRIQUE

(30) Priority: 07.02.2023 CN 202320187667 U
(43) Date of publication of application: 25.09.2024
(73) Proprietor: Contemporary Amperex Technology (Hong Kong) Limited, Central, Central And Western District (HK)
(72) Inventor: LI, Chuan, Ningde, Fujian 352100 (CN); GUO, Zhijun, Ningde, Fujian 352100 (CN); LEI, Yuyong, Ningde, Fujian 352100 (CN); WANG, Peng, Ningde, Fujian 352100 (CN); CAO, Mengkai, Ningde, Fujian 352100 (CN)
(74) Representative: Holt, Lucy Rose
(86) International application number: PCT/CN2023/113131
(87) International publication number: WO 2024/164512

(56) References cited:
- EP-A2- 3 174 127
- CH-A5- 675 324
- CN-A- 1 243 605
- CN-U- 206 432 307
- CN-U- 207 938 693
- CN-U- 212 907 865
- CN-U- 213 692 221
- CN-U- 216 120 656
- CN-U- 218 101 461
- CN-U- 218 182 328
- CN-U- 219 180 656
- KR-A- 20100 044 404
- US-A- 6 033 800
- US-A1- 2016 329 532

## Description

### TECHNICAL FIELD

This application relates to the field of battery technologies, and specifically to a battery cell, a battery, and an electric device.

### BACKGROUND

With the development of new energy technology, the application of batteries is becoming increasingly widespread, for example, in terminal devices such as mobile phones, laptops, battery carts, electric vehicles, electric plane, electric ships, electric toy cars, electric toy boats, electric toy plane, and electric tools.

In the development of battery technologies, in addition to improving the performance of batteries, the reliability of batteries is another non-negligible issue. If the reliability of batteries cannot be guaranteed, the reliability, use costs, and user experience of a terminal product will be directly affected. Therefore, how the reliability of batteries is enhanced is an urgent technical problem that needs to be solved in battery technology.

US 2016/329532 A1 discloses an energy storage apparatus that includes an energy storage device and an adjacent member adjacent to the energy storage device, wherein the energy storage device includes a case body for accommodating an electrode assembly.

US 6 033 800 A discloses a battery container for containing battery elements that includes large thickness sections formed on the outer rims of walls that compose the container and small thickness areas formed in the areas surrounded by the large thickness sections.

EP 3 174 127 A2 discloses an electrode assembly including a first electrode plate, a second electrode plate, and a separator between the first electrode plate and the second electrode plate, a can accommodating the electrode assembly, and a cap assembly coupled to and sealing the can, wherein a top end and a bottom end of the can each have a thickness that is greater than a thickness of a middle portion of the can.

CN 212 907 865 U discloses a shell of a battery. The shell is provided with a containing cavity, the containing cavity is used for containing a pole core of the battery. The shell comprises a main body part and a connecting part which are connected with each other.

CN 1 243 605 A discloses a rectangular and sealed battery incorporating an outer can for accommodating a power generation element and a cover for closing an opening of the outer can such that the outer can and the cover are welded to each other.

KR 2010 0044404 A discloses a secondary battery that has an electrode assembly in a prismatic battery case. A stepped portion of the thickness thicker than a sidewall of a case protrudes in an inner direction along an inner circumference of an opening part of case welded with a top cap.

### SUMMARY

In view of the foregoing problems, embodiments of this application provide a battery cell, a battery, and an electric apparatus, so as to alleviate the technical problem of difficulty in timely release of gas on the side of the electrode assembly.

The following technical solutions are used in the embodiments of this application.

According to a first aspect, an embodiment of this application provides a battery cell according to claim 1.

In the foregoing technical solution, with the recessed zone, which is recessed relative to the opening part, arranged in at least a partial region of the body part of the housing, the thickness at the opening part is relatively thick, so as to ensure the strength after the opening part is fit with the cover, reduce or alleviate the risks of cracking and failure at the welding position between the cover and the housing, improve the reliability of the battery cell, and extend the service life of the battery cell. In addition, with the arrangement of the recessed zone, the space occupied by the recessed zone of the housing can be reduced, and the space utilization rate and energy density of the battery cell can be improved.

In some embodiments, at least a partial region of the opening part is thickened relative to the body part to form the recessed zone; or at least a partial region of the body part is thinned relative to the opening part to form the recessed zone. The recessed zone may be formed either by thickening the opening part or reducing the thickness of the body part. Either thickening or thinning can effectively ensure that the thickness of the opening part can meet the welding requirements with the cover, so as to reduce or alleviate the risks of cracking and failure at the welding position between the cover and the housing and improve the reliability of the battery cell. In addition, when a scheme of thinning a partial region of the body part is adopted, the space occupied by the body part can be reduced, so as to improve the space utilization rate and energy density of the battery cell.

In some embodiments, the recessed zone is located on an inner side of the body part adjacent to the chamber and is recessed in a direction facing away from the chamber; alternatively, the recessed zone is located on an outer side of the body part farther away from the chamber and is recessed in a direction closer to the chamber. When the recessed zone is located on the inner side of the body part, the recessed zone can be used to accommodate an electrolyte and an electrode assembly that are located in the housing. When the recessed zone is located on the outer side of the body part, the recessed zone can be used to accommodate a structural member of the battery such as a thermal management component and a pad. In other words, the recessed zone, regardless of whether being located inside or outside the housing, can improve the space utilization rate of the battery cell and ensure the energy density of the battery cell.

In some embodiments, the recessed zone is located on the inner side of the body part adjacent to the chamber and is recessed in the direction facing away from the chamber. The battery cell further includes an electrode assembly arranged in the chamber, and part of the electrode assembly is accommodated in the recessed zone. The flowing space of the electrolyte can be increased, so that the electrolyte flows more smoothly and reliably in the housing, ensuring the charging and discharging efficiency of the battery cell and the electrochemical performance of the battery cell.

In some embodiments, the housing is a cylindrical structure with an opening at an end; or the housing is a cylindrical structure with openings at two ends, and the battery cell includes two covers, the two covers being connected to the two opening parts and closing the corresponding openings, respectively; or the housing is a prismatic structure with an opening at an end; or the housing is a prismatic structure with openings at two ends, and the battery cell includes two covers, the two covers being connected to the two opening parts and closing the corresponding openings, respectively. The arrangement of the recessed zone is not affected by the shape of the housing, and the housing can be either a cylindrical structure or a prismatic structure. When the housing is of a cylindrical structure, the battery cell can be a cylindrical battery, and when the housing is of a prismatic structure, the battery cell can be a square battery. In addition, the arrangement of the recessed zone is not affected by the number of opening parts of the battery cell. One or two opening parts may be provided. When one opening part is provided, the number of covers is correspondingly one, and when two opening parts are provided, the number of covers is correspondingly two. Because the thickness at the opening part is relatively thick, a position at which the cover is fit with the opening part is not prone to cracking and failure during charging and discharging of the battery cell, which can improve the reliability of the battery cell.

In some embodiments, the housing includes a first side plate, a second side plate, a third side plate, and a fourth side plate that are connected head to tail in sequence, where the first side plate is parallel to and spaced apart from the third side plate, the second side plate is parallel to and spaced apart from the fourth side plate, middle regions of the first side plate, the second side plate, the third side plate, and the fourth side plate jointly form a body part, and end regions of the first side plate, the second side plate, the third side plate, and the fourth side plate jointly form the two opening parts; and the battery cell includes the two covers, the two covers being connected to two opening parts and closing the corresponding openings, respectively; areas of the first side plate and the third side plate are larger than those of the second side plate and the fourth side plate; and regions of the first side plate and the third side plate for forming the body part are integrally recessed relative to the opening part to form one recessed zone, respectively. When the housing is arranged to be square, the battery cell is a square battery. In this case, the recessed zone can be arranged on a large surface (the first side and the third side) with a relatively large area or on a side surface (the second side and the fourth side) with a relatively small area. When being arranged on the large surface, the recessed zone with a relatively large size can be formed, which can fully ensure the space utilization rate of the battery cell.

In some embodiments, regions of the second side plate and the fourth side plate for forming the body part are integrally recessed relative to the opening part to form one recessed zone, respectively. When the housing is arranged to be square, the battery cell is a square battery. With the recessed zones arranged on all four sides of the housing, a weight of the housing can be effectively reduced, improving the energy density of the battery cell and the space utilization rate of the battery cell.

In some embodiments, four recessed zones on the first side plate, the second side plate, the third side plate, and the fourth side plate are in communication. The four recessed zones being communicated can effectively reduce the weight of the housing, improve the energy density of the battery cell, and reduce the space occupied by the housing, effectively improving the space utilization rate of the battery cell.

In some embodiments, the four recessed zones on the first side plate, the second side plate, the third side plate, and the fourth side plate are all located on outer sides of the body part farther away from the chamber. When the four recessed zones are located on the outer sides of the body part, the space outside the housing can be fully utilized to accommodate structures such as a thermal management component, a thermal insulation pad, or a thermal insulation piece, so as to fully improve the space utilization rate of the battery cell.

According to the invention, a ratio of the thickness of the opening part to the thickness of the recessed zone is (65-100):1. Limiting the ratio of the thickness of the opening part to the thickness of the recessed zone can ensure the space utilization rate of the battery cell while ensuring welding strength between the opening part and the cover.

According to the invention, a ratio of a size of the opening part in a length direction of the housing in a total size of the housing in the length direction is 1:(50-100). Limiting the ratio of the size of the opening part in the length direction of the housing to the total length size of the housing can ensure the space utilization rate of the battery cell while ensuring welding strength between the opening part and the cover.

According to the invention, a recessed zone is in arc transition connection with a region adjacent to the recessed zone. The arc transition connection can ensure that the recessed zone and its adjacent regions gradually change in thickness and reduce a sudden drop in strength caused by a sudden change in thickness, ensuring the overall strength of the housing and reducing the risk of damage to the housing. In addition, with the arc transition connection, the risk of damage to a structure accommodated in the recessed zone can be reduced, ensuring the reliability of the structure accommodated in the recessed zone and extending the service life of the battery.

According to the invention, a ratio of a size of the portion of the arc transition connection in the length direction of the housing to a size of the recessed zone in the length direction of the housing is (0.5-5):100. Limiting the ratio of sizes of the portion of the arc transition connection and the recessed zone in the length direction of the housing can ensure the size and strength of the connection portion while ensuring the size of the recessed zone, thereby ensuring the overall strength of the housing and extending its service life.

In some embodiments, two openings are formed at two ends of the housing, and the battery cell includes two covers, the two covers being connected to two opening parts and closing the corresponding openings, respectively. The two covers are both welded to the housing, and one of the two covers is provided with a positive electrode terminal, and the other of the two covers is provided with a negative electrode terminal. Alternatively, either one of the two covers is welded to the housing and provided with a positive electrode terminal and a negative electrode terminal, and the other one of the two covers is integrally formed with the housing. The battery cell further includes an electrode assembly arranged in the chamber, where a positive electrode tab of the electrode assembly is electrically connected to the positive electrode terminal, and a negative electrode tab of the electrode assembly is electrically connected to the negative electrode terminal. With the arrangement of two openings of the housing, the positive electrode terminal and the negative electrode terminal are arranged on two covers respectively. With the arrangement of one opening of the housing, the positive electrode terminal and the negative electrode terminal are both arranged on one cover, so as to fully utilize the space of the housing and ensure the space utilization rate of the housing.

According to a second aspect, an embodiment of this application provides a battery, including a box and the battery cells according to any one of the embodiments of the first aspect, where the battery cells are arranged in the box. As the battery includes the battery cells, the battery also has the advantages of high space utilization rate, high energy density, and long service life.

In some embodiments, the battery further includes a separation component, where the separation component is configured to separate the battery cell from other components adjacent to the battery cell; and at least part of the separation component is accommodated in the recessed zone. With the separation component of the battery arranged in the recessed zone, the space in the recessed zone can be fully utilized, improving the space utilization rate of the battery and making the structure of the battery more compact and reliable. In addition, the recessed zone restricts displacement of the separation component, which can ensure the stability of the separation component and improve the reliability of the battery cell.

In some embodiments, the battery includes a plurality of battery cells arranged sequentially in the box, where the recessed zone of the battery cell is located on an outer side of the body part farther away from the chamber and is recessed in a direction approaching the chamber; and the recessed zone of one of two adj acent battery cells faces the other of the battery cells; and a separation component is located between two battery cells. An intermediate cell is arranged between two battery cells, which can further improve the reliability and stability of the separation component, further improving the reliability and stability of the battery cells.

In some embodiments, recessed zones of any two adjacent battery cells communicate with each other to form an accommodating chamber. The separation component is accommodated in the accommodating chamber. Two recessed zones together forming an accommodating chamber can provide enough installation space for the separation component and fully ensure the space utilization rate of the battery cell. In addition, the separation component is limited by two recessed zones, and its stability and reliability are higher, so that the battery cell has higher stability and reliability.

In some embodiments, the separation component includes at least one of a buffer pad, a reinforcing member, and a thermal management component.

In some embodiments, when the separation component is a buffer pad, at least part of the buffer pad is made of elastic material, such as rubber or other materials, and the buffer pad can provide a buffering function for two adjacent battery cells, thereby improving the reliability and stability of the battery cells.

In some embodiments, when the separation component is a reinforcing member, it can strengthen the strength of the whole battery structure and improve the reliability and stability of the battery cells. The reinforcing member can be a reinforcement plate. In some embodiments, the reinforcement plate may be connected to one or more battery cells, for example by adhesive, to reinforce the structure of the battery cells or battery cell groups. In some other embodiments, the reinforcing member may not be connected to the battery cells.

In some embodiments, when the separation component is a thermal management component, it can adjust the temperature of the battery cells to reduce the probability of thermal runaway and fully improve the reliability of the battery cell. The thermal management component may be a water cooling plate, a thermal conducting plate, or other structures that can adjust the temperature of the battery cell.

In addition, no matter whether the separation component is at least one of the buffer pad, the reinforcing member, and the thermal management component, it can improve the space utilization rate of the battery.

According to a third aspect, an embodiment of this application provides an electric device, including the battery according to any one of the embodiments of the second aspect. As the electric device includes the battery, the electric device also has the advantage of long service life.

The foregoing description is merely an overview of the technical solution of this application. For a better understanding of the technical means in this application such that they can be implemented according to the claims, and to make the above and other objectives, features and advantages of this application easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or example technologies. Apparently, the accompanying drawings in the following description show merely some embodiments of this application, and a person of ordinary skill in the art may derive other drawings from these accompanying drawings without creative efforts.
FIG. 1 is a schematic structural diagram of a vehicle according to some embodiments of this application;
FIG. 2 is an exploded view of a battery according to some embodiments of this application;
FIG. 3 is a first partial schematic structural diagram of a battery according to some embodiments of this application;
FIG. 4 is a second partial schematic structural diagram of a battery according to some embodiments of this application;
FIG. 5 is a schematic structural diagram of a battery cell according to some embodiments of this application;
FIG. 6 is a schematic exploded view of a battery cell according to some embodiments of this application;
FIG. 7 is a first schematic structural diagram of a housing of a battery cell according to some embodiments of this application;
FIG. 8 is an enlarged view of position A of the housing shown in FIG. 7;
FIG. 9 is a second schematic structural diagram of a housing of a battery cell according to some embodiments of this application;
FIG. 10 is an enlarged view of position a of the housing shown in FIG. 9;
FIG. 11 is a cross-sectional view of the housing shown in FIG. 9 along I-I';
FIG. 12 is a locally enlarged view of position b in the cross-sectional view shown in FIG. 11;
FIG. 13 is a third schematic structural diagram of a housing of a battery cell according to some embodiments of this application;
FIG. 14 is a fourth schematic structural diagram of a housing of a battery cell according to some embodiments of this application;
FIG. 15 is an enlarged view of position B of the housing shown in FIG. 14;
FIG. 16 is a fifth schematic structural diagram of a housing of a battery cell according to some embodiments of this application;
FIG. 17 is an enlarged view of position C of the housing shown in FIG. 16; and
FIG. 18 is a schematic block diagram of a manufacturing device of battery cell according to some embodiments of this application.

Reference signs in the figures:
01. vehicle; 10. battery; 101. box; 1011. the first portion; 1012. second portion; 102. battery cell; 1021. cover; 1022. housing; 10221. opening; 10222. chamber; 10223. opening part; 10224. body part; 10225. recessed zone; 10226. first side plate; 10227. second side plate; 10228. third side plate; 10229. fourth side plate; 1023. positive electrode terminal; 1024. negative electrode terminal; 1025. electrolyte injection hole; 1026. electrode assembly; 10261. positive electrode tab; 103. thermal management component; 1031. thermal management channel; 104. buffer pad; 02. manufacturing device; 21. first providing apparatus; 22. second providing apparatus; 23. third providing apparatus; and 24. assembly apparatus.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application, within the scope of the claims.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. A person of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated apparatuses in the embodiments of this application are merely for illustrative purposes and should not constitute any limitations on this application.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration (for example, deintercalation and intercalation) of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. The separator may be made of PP (polypropylene, polypropylene), PE (polyethylene, polyethylene), or the like. In addition, the electrode assembly may be a wound structure or a stacked structure. However, the embodiments of this application are not limited thereto.

For the development of battery technologies, many design factors need to be considered, for example, performance parameters such as energy density, cycle life, discharge capacity, and charge and discharge rate, as well as reliability of the battery. For a battery cell, the battery cell typically includes a housing, a cover welded at an opening of the housing, an electrode assembly, and an electrolyte, where the cover is provided with an electrode terminal, the electrode assembly being arranged in the housing, and the electrode tab of the electrode assembly is electrically connected to the electrode terminal, and the electrolyte is accommodated in the housing and can chemically react with the electrode assembly to ensure normal charging and discharging of the battery cell. In addition, to ensure the energy density and creepage distance of the battery cell, it is often chosen to make the housing size thin.

However, the inventor has noticed that the battery during charge and discharge is prone to shaking or repeated swing (such as left and right swinging or back and forth swinging), and positions of shaking and repeatedly swinging are closer to the welding position between the cover and the housing. After the cover and the housing are welded, a heat affected zone that reduces the strength of the housing is often formed below the molten pool, and the largest zone of shaking and repeatedly swinging of the battery cell is located directly in the heat affected zone. This makes the strength of the largest zone relatively low, and with continuously repeated swinging force, there are risks of cracking and failure in this zone, and a starting point of cracking is mainly located at the weld seam between the housing and the cover.

Therefore, the inventor has analyzed the problem and found that if the thickness of the housing is differentiated by setting the thickness of the body region in the middle of the housing to be relatively thin and the thickness of the region at the welding position with the cover to be relatively thick, the requirements of space utilization and energy density can be met, and the risks of cracking and failure can be reduced. In view of this, in this application, the battery housing is designed to include a housing and a cover, where the housing is provided with an opening and a chamber; the housing includes an opening part and a body part, the opening part surrounding the opening and the body part surrounding the chamber; and the cover is connected to the opening part and closes the opening; where at least a partial region of the body part is recessed relative to the opening part to form a recessed zone, a thickness of the recessed zone being less than that of the opening part. In this application, with the recessed zone, which is recessed relative to the opening part, arranged in at least a partial region of the body part of the housing, the thickness at the opening part is relatively thick, so as to ensure the strength after the opening part is fit with the cover, reduce or alleviate the risks of cracking and failure at the welding position between the cover and the housing, improve the reliability of the battery cell, and extend the service life of the battery cell. In addition, with the arrangement of the recessed zone, the space occupied by the recessed zone of the housing can be reduced, and the space utilization rate and energy density of the battery cell can be improved.

The technical solution described in the embodiments of this application is applicable to batteries and electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as example for description of the following embodiments.

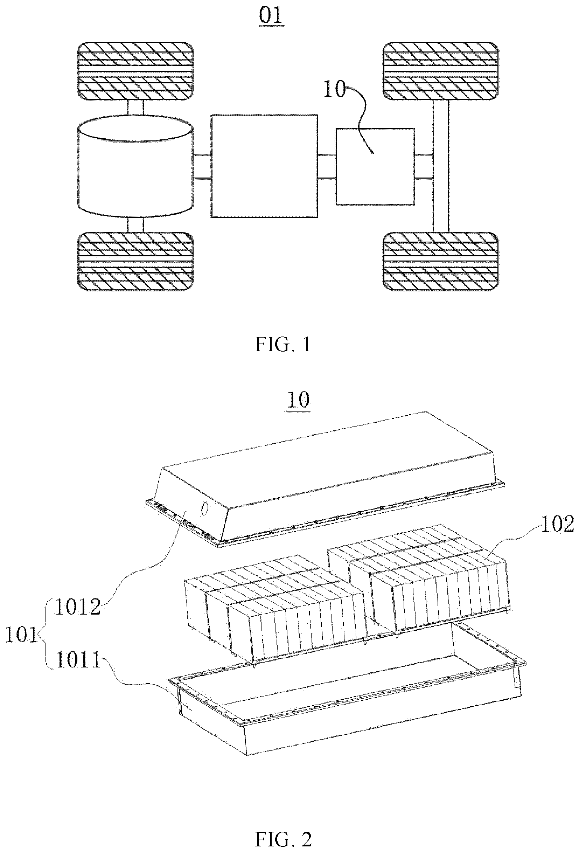

FIG. 1 is a schematic structural diagram of a vehicle 01 according to some embodiments of this application. Refer to FIG. 1. The vehicle 01 is provided with a battery 10 inside, and the battery 10 may be positioned at the bottom, front, or rear of the vehicle 01, or may even be carried on the top or the side of the vehicle 01. The battery 10 may be configured to supply power to the vehicle 01. For example, the battery 10 may be used as an operational power source for the vehicle 01.

The vehicle 01 may further include a controller and a motor, where the controller is configured to control the battery 10 to supply power to the motor, for example, to satisfy power needs of start, navigation, and driving of the vehicle 01. Certainly, in some embodiments of this application, the battery 10 can be used as not only the operational power supply for the vehicle 01 but also a driving power supply for the vehicle 01, replacing all or part of the fossil fuel or the natural gas to provide driving power for the vehicle 01.

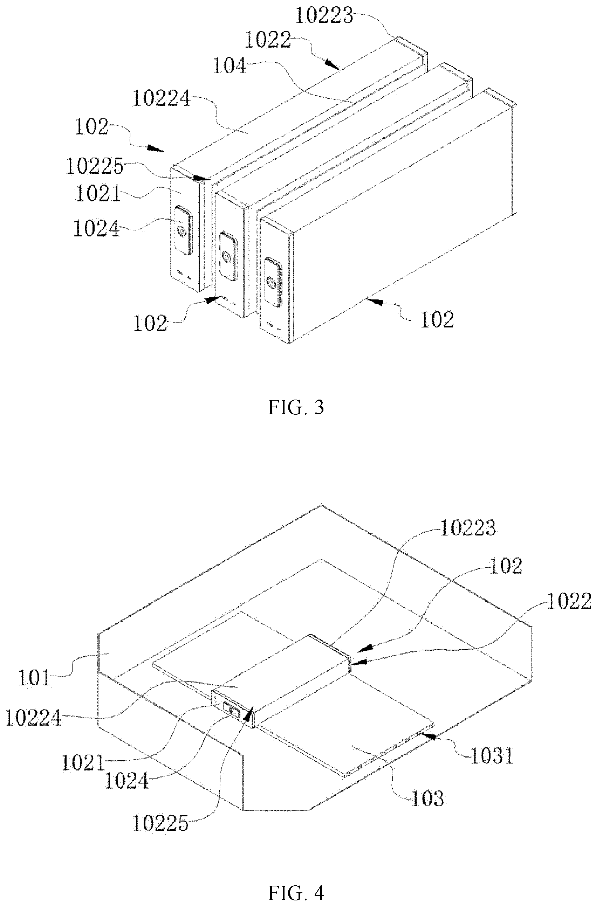

FIG. 2 is an exploded view of a battery 10 according to some embodiments of this application; FIG. 3 is a first partial schematic structural diagram of a battery 10 according to some embodiments of this application; and FIG. 4 is a second partial schematic structural diagram of a battery 10 according to some embodiments of this application. Refer to FIG. 2 to FIG. 4. The battery 10 includes a box 101 and battery cells 102. The box 101 is used to accommodate the battery cells 102.

The box 101 is a component for accommodating the battery cells 102. The box 101 provides an accommodating space for the battery cells 102 to ensure the reliability and stability of the battery cells 102. The box 101 may be a variety of structures. In some embodiments, the box 101 may include a first portion 1011 and a second portion 1012. The first portion 1011 and the second portion 1012 mutually covered, snap-fit, or otherwise stably fit to jointly define a space for accommodating the battery cell 102. In addition, the first portion 1011 and the second portion 1012 may be of various shapes, for example, cuboid, cylinder, or the like. The first portion 1011 may be a hollow structure with one side open, and the second portion 1012 may also be a hollow structure with one side open, where the open side of the second portion 1012 is engaged with the open side of the first portion 1011 so as to form a box 101 having an accommodating space. Alternatively, the first portion 1011 may be a hollow structure with one side open, and the second portion 1012 may be a plate structure, where the second portion 1012 covers the open side of the first portion 1011 so as to form a box 101 having an accommodating space. The first portion 1011 and the second portion 1012 may be sealed by a sealing element, and the sealing element may be a sealing ring, a sealing adhesive, or the like.

Refer to FIG. 2 again. In the battery 10, one or a plurality of battery cells 102 may be provided. If a plurality of battery cells 102 are provided, the plurality of battery cells 102 may be connected in series, parallel, or series-parallel, where being connected in series-parallel means a combination of series and parallel connections of the plurality of battery cells 102. The battery module may be first formed by connecting the plurality of battery cells 102 in series, parallel, or series-parallel, and then a plurality of battery modules are connected in series, parallel, or series-parallel to form an entirety which is accommodated in the box 101. It is also possible that all the battery cells 102 are directly connected in series, parallel, or series-parallel to form an entirety which is then accommodated in the box 101.

In some embodiments, the battery 10 may further include a busbar, and the plurality of battery cells 102 may be electrically connected through the busbar, to connect the plurality of battery cells 102 in series, parallel, or series-parallel. The busbar may be a metal conductor such as copper, iron, aluminum, stainless steel, and aluminum alloy.

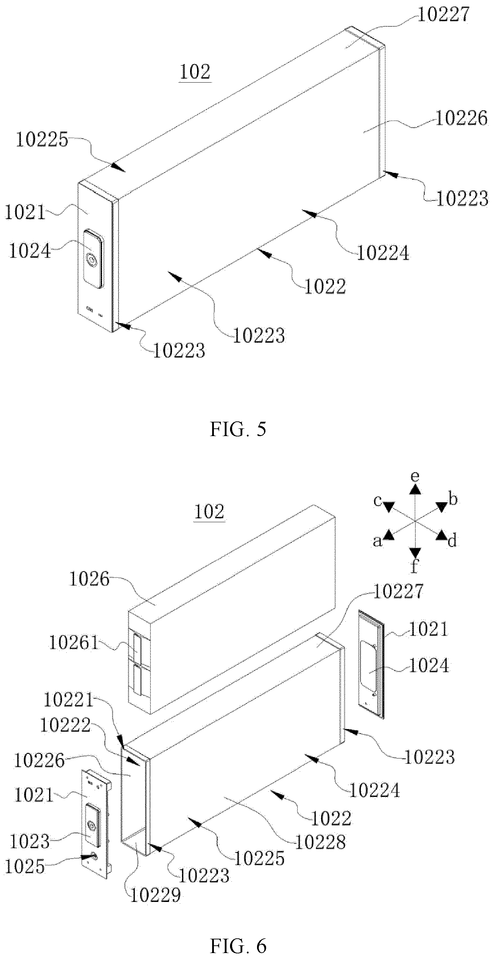

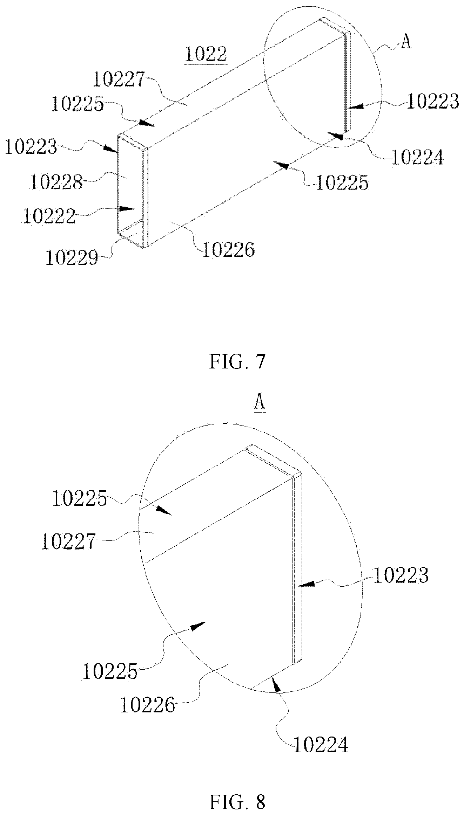

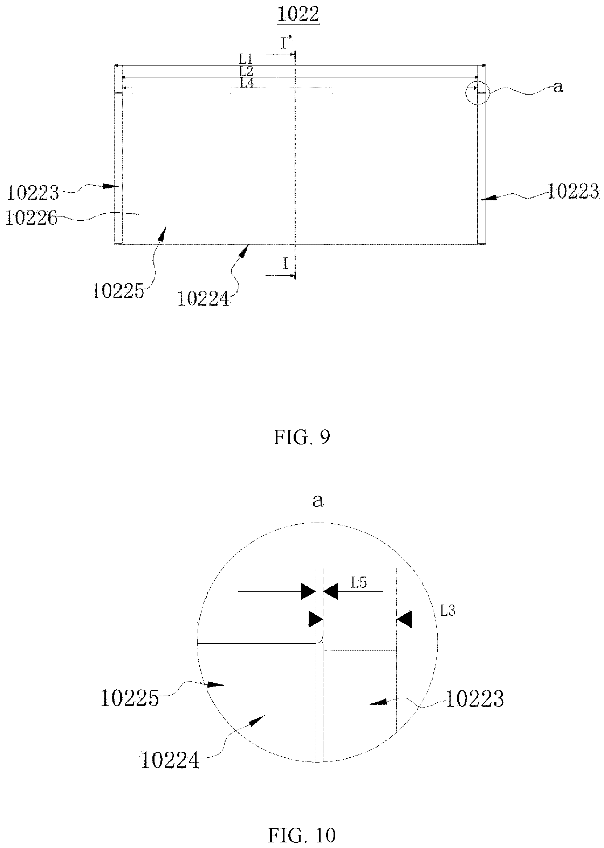

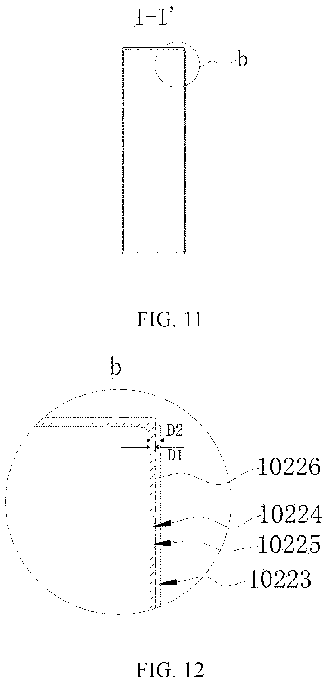

FIG. 5 is a schematic structural diagram of a battery cell 102 according to some embodiments of this application; FIG. 6 is an schematic exploded view of a battery cell 102 according to some embodiments of this application; FIG. 7 is a first schematic structural diagram of a housing 1022 of a battery cell 102 according to some embodiments of this application; FIG. 8 is a locally enlarged view of position A of the housing 1022 shown in FIG. 7; FIG. 9 is a second schematic structural diagram of a housing 1022 of a battery cell 102 according to some embodiments of this application; FIG. 10 is a locally enlarged view of position a of the housing 1022 shown in FIG. 9; FIG. 11 is a cross-sectional view of the housing 1022 shown in FIG. 9 along I-I'; and FIG. 12 is a locally enlarged view of position b in the cross-sectional view shown in FIG. 11. Refer to FIG. 5 to FIG. 12. In some embodiments, the battery cell 102 includes a housing 1022, an electrode assembly 1026, a cover 1021, electrode terminals, and an electrolyte.

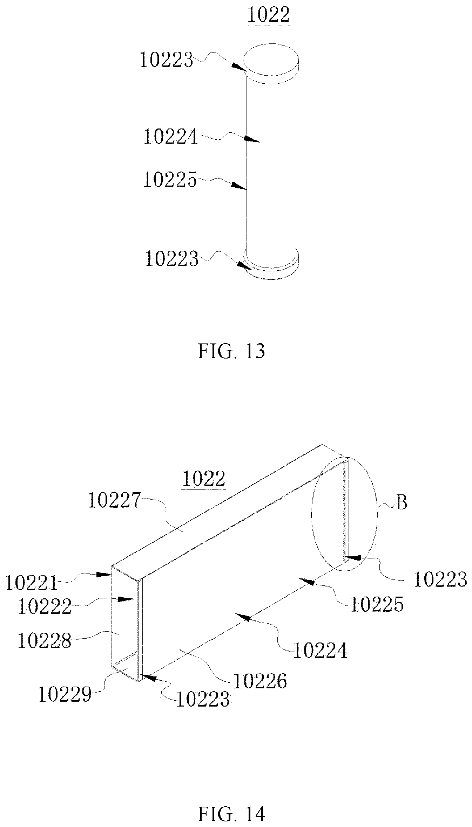

The housing 1022 is a component for accommodating the electrode assembly 1026 and electrolyte (not shown in the figures). The housing 1022 may be a hollow structure with an opening at one end, or may be a hollow structure with openings at two opposite ends. Also, the housing 1022 may be of various shapes. For example, FIG. 13 is a third schematic structural diagram of a housing 1022 of a battery cell 102 according to some embodiments of this application. Referring to FIG. 13, the housing 1022 may be a cylinder as shown in FIG. 13. Certainly, the embodiments of this application are mainly described by taking a quadrangular prism shown in FIG. 5 to FIG. 12 as an example. In other embodiments, the housing 1022 may even be a hexagonal prism structure, which is not described herein. In addition, the housing 1022 may be made of various materials, for example, copper, iron, aluminum, steel, and aluminum alloy.

The electrode assembly 1026 is a part at which electrochemical reactions occur in the battery cell 102. The electrode assembly 1026 may include a positive electrode plate, a negative electrode plate, and a separator. Moreover, the electrode assembly 1026 may be a wound structure formed by winding the positive electrode plate, the separator, and the negative electrode plate, or may be a laminated structure formed by laminating the positive electrode plate, the separator, and the negative electrode plate. The electrode assembly 1026 includes electrode tabs, the electrode tabs are classified into a positive electrode tab 10261 and a negative electrode tab (not shown in the figures), the positive electrode tab 10261 may be part of the positive electrode plate that is uncoated with the positive electrode active substance layer, and the negative electrode tab may be part of the negative electrode plate that is uncoated with the negative electrode active substance layer.

The cover 1021 is a component that closes the open position of the housing 1022 to isolate the internal environment of the battery cell 102 from the external environment. The number of covers 1021 is consistent with the number of open positions of the housing 1022. When the number of open positions is one, the number of covers 1021 can be correspondingly set to one, and when the number of open positions is two or more, the number of covers 1021 can be correspondingly set to two or more, so as to fully ensure that the internal environment of the battery cell 102 is isolated from the external environment, and make the covers 1021 and the housing 1022 jointly define a sealing space for accommodation of the electrode assembly 1026, electrolyte, and other components.

In addition, a shape of the cover 1021 may be adapted to a shape of the housing 1022. For example, when the housing 1022 is a cuboid structure as shown in FIG. 5 to FIG. 12, the cover 1021 may be a rectangular plate-shaped structure adapted to the open position of the housing 1022. For another example, when the housing 1022 is a cylindrical structure as shown in FIG. 13, the cover 1021 may have a circular plate-like structure adapted to the open position of the housing 1022. Moreover, the cover 1021 may also be made of various materials, such as copper, iron, aluminum, steel, and aluminum alloy. The cover 1021 and the housing 1022 may be made of same or different materials.

In addition, the cover 1021 may also be provided with an electrolyte injection hole 1025. The electrolyte injection hole 1025 is used for injection of the electrolyte to ensure normal charging and discharging operation of the battery cell 102. A pressure relief mechanism (not shown in the figures) may also be provided on the cover 1021. The pressure relief mechanism refers to an element or component that is actuated to relieve internal pressure or discharge high-temperature gas when the internal pressure or temperature of the battery cell 102 reaches a predetermined threshold. The threshold design varies according to different design requirements. The threshold may depend on the material used for one or more of a positive electrode plate, a negative electrode plate, an electrolyte, and a separator in the battery cell 102. The pressure relief mechanism may take the form of an explosion-proof valve, a gas valve, a pressure relief valve, a safety valve, or the like, and may specifically adopt a pressure-sensitive or temperature-sensitive element or structure. To be specific, when the internal pressure or temperature of the battery cell 102 reaches a predetermined threshold, the pressure relief mechanism performs an action or a weak structure provided in the pressure relief mechanism is damaged, so as to form an opening or channel for relieving the internal pressure or temperature.

The electrode terminal is arranged on the cover 1021. The electrode terminal is configured to be electrically connected to an electrode tab of the electrode assembly 1026 to output electric energy of the battery cell 102. In the battery cell 102, there may be two electrode terminals. The two electrode terminals are a positive electrode terminal 1023 and a negative electrode terminal 1024, where the positive electrode terminal 1023 is configured be electrically connected to the positive electrode tab 10261 and the negative electrode terminal 1024 is configured to be electrically connected to the negative electrode tab. In an embodiment in which one cover 1021 is provided in the battery cell 102, the positive electrode terminal 1023 and the negative electrode terminal 1024 may be arranged on the same cover 1021. In this case, the cover 1021 with the positive electrode terminal 1023 and the negative electrode terminal 1024 is fit with the housing 1022 by welding. In an embodiment in which two covers 1021 are provided in the battery cell 102, the positive electrode terminal 1023 and the negative electrode terminal 1024 may be arranged on a same cover 1021, or the positive electrode terminal 1023 and the negative electrode terminal 1024 may be arranged on two covers 1021, respectively. When the positive electrode terminal 1023 and the negative electrode terminal 1024 are arranged on one cover 1021, the cover 1021 is fit with the housing 1022 by welding, and another cover 1021 without the positive electrode terminal 1023 and the negative electrode terminal 1024 may be integrally formed with the housing 1022. When the positive electrode terminal 1023 and the negative electrode terminal 1024 are arranged on two covers 1021, the two covers 1021 may be fit with the housing 1022 by welding, respectively.

It should be noted that the battery cell 102 may also be provided with a current collecting member (not shown in the figures) as required, and the current collecting member is a component that connects an electrode tab to an electrode terminal for an electrical connection between the electrode tab and the electrode terminal. For example, there are two covers 1021 in the battery cell 102, and the positive electrode terminal 1023 and the negative electrode terminal 1024 are arranged on the two covers 1021, respectively. The positive electrode terminal 1023 may be connected to the positive electrode tab 10261 through one current collecting member, and the negative electrode terminal 1024 may be connected to the negative electrode tab through another current collecting member, so as to fully ensure the normal charging and discharging operation.

The following describes in detail a specific structure of the housing 1022 of the battery cell 102 with reference to the accompanying drawings.

Refer to FIG. 2 to FIG. 6 again. The housing 1022 of the battery cell 102 provided in an embodiment of this application has an annular structure. The annular structure may be either a cylinder as shown in FIG. 13 or a prism as shown in FIG. 5. This embodiment of this application is described by taking a prism, specifically a square prism, as an example, and other embodiments may take a hexagonal prism, an octagonal prism, and the like as an example. The housing 1022 is provided with an opening 10221 and a chamber 10222. The chamber 10222 is a region enclosed by the inner surface of the housing 1022, and the opening 10221 is an end hollow region in communication with the chamber 10222. In addition, the housing 1022 includes an opening part 10223 and a body part 10224. The opening part 10223 surrounds the opening 10221, and the body part 10224 surrounds the chamber 10222. In other words, the opening part 10223 is a wall body circumferential to the opening 10221, and the body part 10224 is a wall circumferential to the chamber 10222 except the position of the opening 10221. Specifically, the housing 1022 is a structure with two openings 10221 on two sides, and two openings 10221 are provided and located at two ends of the housing 1022 in direction ab shown in FIG. 6 (which is also the length direction of the housing 1022), so that two opening parts 10223 are also provided and located at two ends of the body part 10224 in the length direction of the housing 1022. In this case, the number of the covers 1021 is correspondingly set at two. The two covers 1021 are connected to the corresponding opening parts 10223 and close the corresponding openings 10221, respectively, and the positive electrode terminal 1023 and the negative electrode terminal 1024 are arranged on the two covers 1021, respectively, so as to be electrically connected to the positive electrode tab 10261 and the negative electrode tab of the electrode assembly 1026, ensuring the normal charging and discharging operation of the battery 10.

Certainly, in other embodiments, the housing 1022 may alternatively be provided as a structure with one opening 10221, the housing 1022 being semi-closed when one opening 10221 is provided. In this case, one opening part 10223 is correspondingly provided and located at one of the two ends of the body part 10224. Correspondingly, in this case, one cover 1021 is provided, and the positive electrode terminal 1023 and the negative electrode terminal 1024 may be both arranged on this cover 1021, or one of the positive electrode terminal 1023 and the negative electrode terminal 1024 may be arranged on this cover 1021, and the other one is arranged on a wall of the housing 1022 opposite to the cover 1021, or even the positive electrode terminal 1023 and the negative electrode terminal 1024 may be both arranged on the wall of the housing 1022 opposite to the cover 1021, or on other walls of the housing 1022, so that the positive electrode terminal 1023 and the negative electrode terminal 1024 can be electrically connected to the positive electrode tab 10261 and the negative electrode tab of the electrode assembly 1026, respectively.

In the embodiments of this application, to alleviate the problems of cracking and failure at the joint between the cover 1021 and the housing 1022, when the housing 1022 of the battery cell 102 has the above structure, at least a partial region of the body part 10224 is recessed relative to the opening part 10223 to form a recessed zone 10225, a thickness of the recessed zone 10225 being less than that of the opening part 10223. To be specific, as shown in FIG. 12, the thickness of the recessed zone 10225 formed by the body part 10224 is denoted as D1, and the thickness of the opening part 10223 is denoted as D2, D2 being greater than D1 in size. With the recessed zone 10225, which is recessed relative to the opening part 10223, arranged in at least a partial region of the body part 10224 of the housing 1022, the thickness at the opening part 10223 is relatively thick, so as to ensure the strength after the opening part 10223 is fit with the cover 1021, reduce or alleviate the risks of cracking and failure at the position at which the cover 1021 is connected to the housing 1022, improve the reliability of the battery cell 102, and extend the service life of the battery cell 102. In addition, with the arrangement of the recessed zone 10225, the space occupied by the wall of the formed recessed zone 10225 of the housing 1022 can be reduced, and the space utilization rate and energy density of the battery cell 102 can be improved.

It should be noted that the arrangement of the recessed zone 10225 is not affected by the shape of the housing 1022. The housing 1022 may be either a cylindrical structure as shown in FIG. 13 or a prismatic structure as shown in FIG. 5 to FIG. 12. When it is a cylindrical structure as shown in FIG. 13, two ends of the cylindrical housing 1022 form opening parts 10223, a middle region between two ends of the cylindrical housing 1022 at least partially forms the recessed zone 10225, so that the thickness of the recessed zone 10225 is less than those of the opening parts 10223. In addition, the arrangement of the recessed zone 10225 is not affected by the number of opening parts 10223 of the battery cell 102. One or two opening parts 10223 may be provided. When one opening part 10223 is provided, the number of covers 1021 is correspondingly one, and when two opening parts 10223 are provided, the number of covers 1021 is correspondingly two.

Refer to FIG. 5 to FIG. 12 again. In the embodiments of this application, at least a partial region of the opening part 10223 is thickened relative to the body part 10224 to form a recessed zone 10225; alternatively, the thickness of at least a partial region of the body part 10224 is thinned relative to the opening part 10223 to form a recessed zone 10225. To be specific, the difference in thickness between the opening part 10223 and the body part 10224 may be formed by either thickening part of the wall or thinning part of the wall, and specifically may be formed by thickening the opening part 10223 or reducing the thickness of the body part 10224.

The thickening may be to add a flange in at least a partial region circumferential to the inner or outer side of the opening part 10223. For example, a square flange facing away from the electrode assembly 1026 may be provided on the outer side of the opening part 10223. The flange may be made of a metal material, a plastic material, or a composite material of metal and plastic, and specifically, a material the same as that of the housing 1022 may be selected so as to reduce the processing difficulty and production cost. Correspondingly, reducing the thickness may be to carry out thinning or extrusion treatment on at least a partial region of the body part 10224, so that the thickness of at least a partial region of the body part 10224 is reduced, thus forming a recessed zone 10225 relative to the opening part 10223. In this application, the thickness of at least a partial region of the body part 10224 is reduced by thinning or extrusion treatment, so as to ensure the thickness of the opening part 10223 and the connection strength between the cover 1021 and the housing 1022, save the cost, and reduce the occupied space of the housing 1022 to improve the space utilization rate and energy density of the battery cell 102. In other embodiments, the method for forming the housing 1022 may alternatively be 3D printing or additive manufacturing, or the like, as long as a thickness difference between the body part 10224 and the opening part 10223 can be formed, which is not limited in the embodiments.

Either thickening or reducing the thickness can effectively ensure that the thickness of the opening part 10223 is greater than that of a position of the body part 10224 at which the recessed zone 10225 is formed, so that the strength requirements can be met after the opening part 10223 is welded to the cover 1021, reducing or alleviating the risks of cracking and failure at the welding position between the cover 1021 and the housing 1022 and improving the reliability of the battery cell 102. In addition, when a scheme of thinning a partial region of the body part 10224 is adopted, the space occupied by the body part 10224 can be reduced, so as to improve the space utilization rate and energy density of the battery cell 102.

It should be noted that in the embodiments of this application, the recessed zone 10225 is located on the outer side of the body part 10224 farther away from the chamber 10222 and recessed in a direction closer to the chamber 10222. When the recessed zone 10225 is located on the outer side of the body part 10224, the recessed zone 10225 can be used for other structural member in the battery 10, so as to make the structure of the battery 10 more compact and reliable, reduce the occupied space of the battery cell 102 and improve the energy density of the battery 10. Certainly, in other embodiments, the recessed zone 10225 may alternatively be located on the inner side of the body part 10224 adjacent to the chamber 10222 and recessed in a direction facing away from the chamber 10222. When the recessed zone 10225 is located on the inner side of the body part 10224, the recessed zone 10225 may be used to accommodate the electrolyte and the electrode assembly 1026 located in the housing 1022, so as to increase the flowing space of the electrolyte and make the electrolyte flow more smoothly and reliably in the housing 1022, ensuring the charging and discharging efficiency of the battery cell 102 and the electrochemical performance of the battery cell 102.

It should also be noted that in the embodiments of this application, no matter whether the recessed zone 10225 is located on the outer side of the body part 10224 farther away from the chamber 10222 or at the inner side of the body part 10224 closer to the chamber 10222, the shape of the recessed zone 10225 may be selected as a regular square, circle, triangle, polygon, or a special-shaped structure. The embodiments of this application are mainly described by taking a square recessed zone 10225 as an example. The square recessed zone 10225 is convenient for processing and manufacturing, and is also convenient for accommodating other square structural members of the battery 10, so as to fully improve the space utilization rate of the battery 10 while saving the manufacturing cost.

Refer to FIG. 5 to FIG. 12 again. In the embodiments of this application, the housing 1022 includes a first side plate 10226, a second side plate 10227, a third side plate 10228, and a fourth side plate 10229 that are connected head to tail in sequence. The first side plate 10226, the second side plate 10227, the third side plate 10228, and the fourth side plate 10229 are all square thin plates, the first side plate 10226 is parallel to and spaced apart from the third side plate 10228 in a width direction of the housing 1022 (that is, direction cd shown in FIG. 6, perpendicular to direction ab), and the second side plate 10227 is parallel to and spaced apart from the fourth side plate 10229 in a height direction of the housing 1022 (that is, direction ef shown in FIG. 6, where direction ab, direction cd, and direction ef are perpendicular to each other). Middle regions of the first side plate 10226, the second side plate 10227, the third side plate 10228, and the fourth side plate 10229 jointly form the body part 10224, and end regions of the first side plate 10226, the second side plate 10227, the third side plate 10228, and the fourth side plate 10229 jointly form the two opening parts 10223. The two covers 1021 of the battery cell 102 are connected to the two opening parts 10223 and close the corresponding openings 10221, respectively. In addition, areas of the first side plate 10226 and the third side plate 10228 are larger than those of the second side plate 10227 and the fourth side plate 10229, which means that the first side plate 10226 and the third side plate 10228 are large surfaces of the battery cell 102 with a relatively large area, and the second side plate 10227 and the fourth side plate 10229 are side surfaces of the battery cell 102 with a relatively small area. Moreover, regions of the first side plate 10226 and the third side plate 10228 for forming the body part 10224 are integrally recessed relative to the opening part 10223 to form one recessed zone 10225, respectively.

Arranging the recessed zone 10225 on a large surface and arranging the entire body part 10224 to be recessed relative to the opening part 10223 can not only form a recessed zone 10225 with a relatively large size, so as to fully reduce the thickness and ensure the space utilization rate of the battery cell 102, but also reduce the thickness of the housing 1022, reduce the weight of the battery 10, and improve the energy density of the battery 10.

In an optional solution, referring to FIG. 5 to FIG. 12 again, in the embodiments of this application, on the basis that the first side plate 10226 and the third side plate 10228 form one recessed zone 10225, respectively, regions of the second side plate 10227 and the fourth side plate 10229 for forming the body part 10224 are also integrally recessed relative to the opening part 10223 to form one recessed zone 10225, respectively. Arranging recessed zones 10225 on four sides of the housing 1022 can effectively reduce the weight of the housing 1022, improve the energy density of the battery cell 102, and improve the space utilization rate of the battery cell 102. In addition, since the first side plate 10226, the second side plate 10227, the third side plate 10228, and the fourth side plate 10229 are all integrally thinned relative to the opening part 10223, this makes their processes simpler and allows the production and manufacturing costs to be controlled.

Further optionally, in the embodiments of this application, four recessed zones 10225 on the first side plate 10226, the second side plate 10227, the third side plate 10228, and the fourth side plate 10229 are in communication. The four recessed zones 10225 in communication can effectively reduce the weight of the housing 1022 and improve the energy density of the battery cell 102. In addition, because the four recessed zones 10225 are all located on the outer sides the body part 10224, the space outside the housing 1022 can be fully utilized to accommodate other structures of the battery 10, so as to fully improve the space utilization rate of the battery cell 102. In addition, this arrangement also facilitates the processing and manufacturing of the housing 1022, which can save the processing and manufacturing costs.

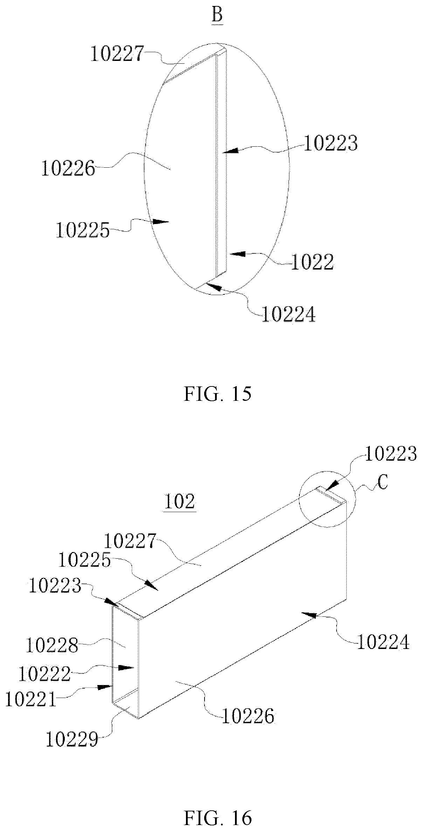

It should be noted that FIG. 14 is a fourth schematic structural diagram of a housing 1022 of a battery cell 102 according to some embodiments of this application, and FIG. 15 is a locally enlarged view of position B of the housing 1022 shown in FIG. 14. Refer to FIG. 14 and FIG. 15. In the embodiments of this application, only at least one of the first side plate 10226 and the third side plate 10228 may be thinned, and the second side plate 10227 and the fourth side plate 10229 are not thinned. For example, only regions of the first side plate 10226 and the third side plate 10228 for forming the body part 10224 may be integrally recessed relative to the opening part 10223 to form one recessed zone 10225, respectively. In this case, the battery cell 102 has two recessed zones 10225 formed on large surfaces, which can effectively improve the space utilization rate of the battery 10, improve the energy density of the battery 10, and ensure the reliability of the battery 10, as compared with a solution without a recessed zone 10225.

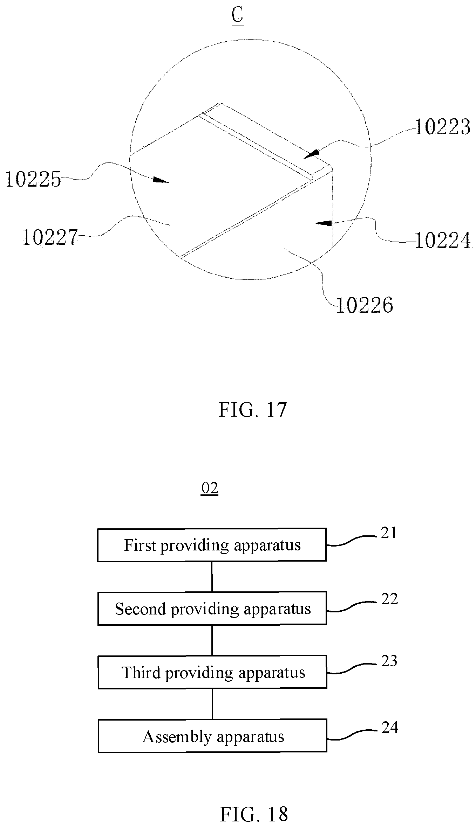

It should also be noted that FIG. 16 is a fifth schematic structural diagram of a housing 1022 of a battery cell 102 according to some embodiments of this application, and FIG. 17 is a locally enlarged view of position C of the housing 1022 shown in FIG. 16. Refer to FIG. 11 and FIG. 12. In the embodiments of this application, only at least one of the second side plate 10227 and the fourth side plate 10229 may be thinned, and the first side plate 10226 and the third side plate 10228 are not thinned. For example, only regions of the second side plate 10227 and the fourth side plate 10229 for forming the body part 10224 may be integrally recessed relative to the opening part 10223 to form one recessed zone 10225, respectively. In this case, the battery cell 102 has two recessed zones 10225 formed on the second side plate 10227 and the fourth side plate 10229, which can effectively improve the space utilization rate of the battery 10, improve the energy density of the battery 10, and ensure the reliability of the battery 10, as compared with a solution without a recessed zone 10225.

In addition, it should be noted that the recessed zones 10225 provided in the embodiments of this application are all formed by thinning the entire corresponding side plates relative to the opening part 10223. In other embodiments, whether a recessed zone 10225 is provided on the first side plate 10226, the second side plate 10227, the third side plate 10228, or the fourth side plate 10229, local thinning can be adopted to ensure the overall strength of the housing 1022. A position of the recessed zone 10225 formed by local thinning may be located either in the middle of a side plate or in close proximity to the opening part 10223. A shape of the recessed zone 10225 formed by local thinning may be a regular shape such as a square or a special-shaped structure, which is not limited in the embodiments of this application.

Refer to FIG. 11 and FIG. 12 again. In the embodiments of this application, a ratio of the thickness of the opening part 10223 to the thickness of the recessed zone 10225 is (65-100):1, which means that a ratio of D2/D1 is (65-100):1. For example, the ratio of D2/D1 may be selected as 65:1, 100:1, 60:1, 50:1, 30:1, 20:1, and the like. More specifically, the thickness of the opening part 10223 can be set to 0.4-2 mm, for example, 2 mm, and the thickness of the recessed zone 10225 can be set to 0.004-0.03 mm, for example, 0.01 mm. Limiting the ratio of the thickness of the opening part 10223 to the thickness of the recessed zone 10225 can ensure the space utilization rate of the battery cell 102 while ensuring welding strength between the opening part 10223 and the cover 1021. In addition, when the ratio of D2/D1 is greater than 100, a size of the opening part 10223 is thicker than that of the recessed zone 10225, and welding of the opening part 10223 to the cover 1021 is relatively costly and has a relatively long process time. When the ratio of D2/D1 is less than 100, the size of the formed concave region 10225 is relatively small, and the space utilization rate of the battery cell 102 is relatively reduced. Certainly, in other embodiments, the thickness ratio of the opening part 10223 and the recessed zone 10225 can be adjusted according to the change of the structure and shape of the battery cell 102, which is not limited in the embodiments.

Refer to FIG. 9 and FIG. 10 again. In the embodiments of this application, a ratio of a size of the opening part 10223 in a length direction of the housing 1022 in a total size of the housing 1022 in the length direction is 1:(50-100). To be specific, as shown in FIG. 9 and FIG. 10, the size of the housing 1022 in its length direction is denoted as L1, a size of the body part 10224 in the length direction of the housing 1022 is denoted as L2, the size of the opening part 10223 in the length direction of the housing 1022 is denoted as L3, L2 + L3 = L1, and a ratio of L3/L1 is 1:(50-100). For example, the ratio of L3/L1 may be 1:50, 1:100, 1:60, 1:70, 1:80, 1:90, and the like. More specifically, the size of the housing 1022 in its length direction may be 15-1000 mm, for example, 800 mm, and the size of the opening part 10223 in the length direction of the housing 1022 may be 0.3-10 mm, specifically 8 mm. Limiting the ratio of the size of the opening part 10223 in the length direction of the housing 1022 in the length of the housing 1022 can ensure the space utilization rate of the battery cell 102 while ensuring welding strength between the opening part 10223 and the cover 1021. Moreover, when a ratio of the size of the opening part 10223 in the length direction of the housing 1022 in the total size of the housing 1022 in the length direction is less than 1:100, the size of the opening part 10223 is narrow, which is not conducive to the welding operation and will increase the welding difficulty. When the ratio of the size of the opening part 10223 in the length direction of the housing 1022 in the total size of the housing 1022 in the length direction is greater than 1:50, the size of the opening part 10223 is large, and welding of the opening part 10223 to the cover 1021 is relatively costly and has a relatively long process time. Certainly, in other embodiments, width of the opening part 10223 can be adjusted according to the change of the structure and shape of the battery cell 102, which is not limited in the embodiments.

In an optional solution, the recessed zone 10225 is in arc transition connection with a region adjacent to the recessed zone 10225. The arc transition connection means that the recessed zone 10225 and adjacent regions of the recessed zone 10225 are transitionally connected by an arc-like structure. Since the body part 10224 formed by the first side plate 10226, the second side plate 10227, the third side plate 10228, and the fourth side plate 10229 is integrally thinned relative to the opening part 10223, the recessed zone 10225 and the regions adjacent to the recessed zone 10225 refer to the position at which the recessed zone 10225 is connected to the opening part 10223. The arc transition connection can ensure that the recessed zone 10225 and its adjacent regions gradually change in thickness and reduce a sudden drop in strength caused by a sudden change in thickness, ensuring the overall strength of the housing 1022 and reducing the risk of damage to the housing 1022. In addition, with the arc transition connection, the risk of damage to a structure accommodated in the recessed zone 10225 can be reduced, ensuring the reliability of the structure accommodated in the recessed zone 10225 and extending the service life of the battery 10.

It should be noted that the ratio of the size of the portion of the arc transition connection in the length direction of the housing 1022 to the size of the recessed zone 10225 in the length direction of the housing 1022 is (0.5-5):100. To be specific, as shown in FIG. 9 and FIG. 10, the size of the portion of the arc transition connection in the length direction of the housing 1022 is denoted as L5, the size of the body part 10224 in the length direction of the housing 1022 is denoted as L2, the size of the recessed zone 10225 in the length direction of the housing 1022 is denoted as L4, and a ratio of L5/L4 is (0.5-5):100. For example, the ratio of L5/L4 may be 0.5:100, 5:100, and even 1:100, 2:100, 3:100, 4: 00, and the like. More specifically, a width size of the portion of the arc transition connection may be set to 0.3-10 mm, for example, 10 mm, and a width size of the recessed zone 10225 may be set to 100 mm. Limiting a width ratio of sizes of the portion of the arc transition connection and the recessed zone 10225 can ensure the width and strength of the connection portion while ensuring the size of the recessed zone 10225, thereby ensuring the overall strength of the housing 1022 and extending its service life. In addition, when the ratio of L5/L4 is less than 0.5:100, the transition region is narrow, and the overall strength of the housing 1022 decreases. When the ratio of L5/L4 is greater than 5:100, the transition region is wide, and the space utilization rate of the battery cell 102 decreases.

Refer to FIG. 2 to FIG. 4 again. An embodiment of this application provides a battery 10, including a box 101 and the battery cells 102 provided in any one of the foregoing embodiments. The box 101 is configured to accommodate the battery cells 102. As the battery 10 includes the battery cells 102, the battery 10 also has the advantages of high space utilization rate, high energy density, and long service life.

In an optional solution, referring to FIG. 3 again, the battery 10 further includes a separation component, where the separation component is configured to separate the battery cell 102 from other components adjacent to the battery cell 102; and at least part of the separation component is accommodated in the recessed zone 10225. The separation component is a component that assists the battery cells 102 in electrical connection, buffering, strengthening, and temperature adjustment in the battery 10. For example, the separation component can be at least one of a buffer pad 104, a thermal management component 103, and a reinforcing member. With the separation component arranged in the recessed zone 10225, the space in the recessed zone 10225 can be fully utilized, improving the space utilization rate of the battery 10 and making the structure of the battery 10 more compact and reliable. In addition, the recessed zone 10225 restricts displacement of the separation component, which can ensure the reliability and stability of the separation component and improve the reliability of the battery cell 102.

For example, in the embodiments of this application, the battery 10 includes a plurality of battery cells 102 arranged sequentially in the box 101, where the recessed zone 10225 of the battery cell 102 is located on an outer side of the body part 10224 farther away from the chamber 10222 and is recessed in a direction approaching the chamber 10222; and the recessed zone 10225 of one of two adjacent battery cells 102 faces the other of the battery cells 102. The separation component includes a buffer pad 104. At least part of the buffer pad 104 is made of an elastic material, such as rubber or other materials, and the buffer pad 104 is accommodated in the recessed zone 10225. For example, the buffer pad 104 is a rubber structure with compression. The buffer pad 104 when uncompressed has a portion thereof inserted into the recessed zone 10225 and another portion thereof protruding out of the recessed zone 10225, and when compressed under the compression of the battery cells 102, the buffer pad 104 may be fully accommodated within the recessed zone 10225, or mostly be disposed within the recessed zone 10225, to reduce the collision and damage between the battery cells 102. With the buffer pad 104 arranged in the recessed zone 10225, the space in the recessed zone 10225 can be fully utilized, improving the space utilization rate of the battery 10 and making the structure of the battery 10 more compact and reliable. In addition, the recessed zone 10225 restricts displacement of the buffer pad 104, which can ensure the buffering effect of the buffer pad 104 on the battery cell 102 and improve the reliability of the battery cell 102.

Further optionally, referring to FIG. 4 again, in the embodiments of this application, the recessed zones 10225 of any two adj acent battery cells 102 are the same in size and communicate with each other to form an accommodating chamber. The buffer pad 104 is accommodated in the accommodating chamber. Two recessed zones 10225 together forming an accommodating chamber can the thickness of the buffer pad 104 can allow the thickness of the buffer pad to be set thicker to ensure the buffering effect; in addition, the buffer pad 104 is limited by two recessed zones 10225, and its stability is higher, so that the battery cell 102 has higher reliability.

It should be noted that the buffer pad 104 provided in the embodiments of this application may also be replaced by a thermal insulation pad, a thermal conductive pad, or other pad-like or plate-like structures with cooling function or heating function, which is not limited in the embodiments.

For another example, in the embodiments of this application, the separation component includes a thermal management component 103. The thermal management component 103 is arranged in the box 101, and the thermal management component 103 is inserted into the recessed zone 10225. The thermal management component 103 is a hollow structure with a thermal management channel 1031 inside, and the thermal management channel 1031 can be used for passage of a fluid such as cooling liquid to exchange heat with the battery cell 102, so as to maintain the temperature of the battery cell 102 within a normal range, reduce the probability of thermal runaway, and ensure the reliability of the battery 10. Specifically, the thermal management component 103 is a cooling plate, and in other embodiments, may alternatively be a thermal conductive plate or other structures that can adjust the temperature of the battery cell 102. The recessed zone 10225 can be arranged to accommodate the thermal management component 103 of the battery 10, which can not only improve the space utilization rate of the battery 10, but also help to reduce and alleviate the thermal runaway of the battery cell 102, and improve the reliability of the battery cell 102.

For another example, in the embodiments of this application, the separation component includes a reinforcing member (not shown in the figures). The reinforcing member is a structure that can enhance the structural strength of the whole battery 10 and improve the reliability and stability of the battery cell 102. The reinforcing member can be a reinforcement plate. In some embodiments, the reinforcement plate may be connected to one or more battery cells 102, for example by adhesive, to reinforce the structure of the battery cells 102 or a module formed by the battery cells 102. In some other embodiments, the reinforcing member may not be directly connected to the battery cells 102.

It should be noted that, in the embodiments, the first side plate 10226, the second side plate 10227, the third side plate 10228, and the fourth side plate 10229 are all provided with a recessed zone 10225. However, due to the high temperature and susceptibility to thermal runaway in the middle of the large surface, the thermal management component 103 may be specifically selected to be inserted into the recessed zone 10225 formed on the first side plate 10226 to cool the large surface of the battery cell 102, so as to ensure the cooling effect and improve the reliability of the battery 10. In other embodiments, the thermal management component 103 may alternatively be insertion matched with the recessed zone 10225 of the third side plate 10228, the second side plate 10227, or the fourth side plate 10229, which is not limited in the embodiments.

It should also be noted that the insertion matched means that at least part of the thermal management component 103 extends into the recessed zone 10225, and at least one plate wall of the thermal management component 103 is attached to a corresponding wall surface of the recessed zone 10225, so as to fully ensure the cooling effect and ensure the reliability of the battery 10.

In addition, it should be noted that the recessed zone 10225 provided in the embodiments of this application is mainly used to accommodate the buffer pad 104 or the thermal management component 103. In other embodiments, the recessed zone 10225 may also be used to accommodate other structural components in the battery 10, such as part of a reinforcement or buffer structure of the box 101, which is not limited in the embodiments.

Refer to FIG. 1 to FIG. 17 again. According to some embodiments of this application, preferably, this application provides a battery 10. The battery 10 includes a box 101 and a plurality of battery cells 102 arranged in the box 101. The battery cell 102 includes a housing 1022, an electrode assembly 1026, a cover 1021, electrode terminals, and an electrolyte. The housing 1022 is of a quadrangular prism shape and an annular structure with openings 10221 at two ends. The housing 1022 is provided with an opening 10221 and a chamber 10222. The housing 1022 includes an opening part 10223 and a body part 10224. The opening part 10223 surrounds the opening 10221, and the body part 10224 surrounds the chamber 10222. In addition, the body part 10224 is thinned as a whole relative to the thickness of the opening part 10223 to form a recessed zone 10225, so that the thickness of the recessed zone 10225 is less than that of the opening part 10223, and the recessed zone 10225 of the battery cell 102 is located on an outer side of the body part 10224 farther away from the chamber 10222 and is recessed in a direction approaching the chamber 10222; the recessed zone 10225 of one of two adjacent battery cells 102 faces the other battery cell 102, the recessed zones 10225 of any two adjacent battery cells 102 communicate to form an accommodating chamber, and the buffer pad 104 is accommodated in the accommodating chamber. Two covers 1021 are provided, respectively covered at two openings 10221, and welded with the opening parts 10223 at corresponding positions. Each cover 1021 is provided with an electrode terminal, and the two electrode terminals have opposite polarities. The two covers 1021 and the housing 1022 together enclose a space for accommodating the electrode assembly 1026 and the electrolyte. After the electrode assembly 1026 is accommodated in the space formed by the cover 1021 and the housing 1022, a positive electrode tab 10261 and a negative electrode tab of the electrode assembly 1026 are electrically connected to an electrode terminal with a corresponding polarity in a corresponding position, respectively.

In the embodiments of this application, with the recessed zone 10225, which is recessed relative to the opening part 10223, arranged in at least a partial region of the body part 10224 of the housing 1022, the thickness at the opening part 10223 is relatively thick, so as to ensure the strength after the opening part 10223 is fit with the cover 1021, reduce or alleviate the risks of cracking and failure at the position at which the cover 1021 is connected to the housing 1022, improve the reliability of the battery cell 102, and extend the service life of the battery cell 102. In addition, with the arrangement of the recessed zone 10225, the space occupied by the wall of the formed recessed zone 10225 of the housing 1022 can be reduced, and the space utilization rate and energy density of the battery cell 102 can be improved. In addition, forming openings 10221 at two ends of the housing 1022 is also convenient to assembling and manufacturing the battery cells 102. In addition, with the buffer pad 104 arranged in the recessed zone 10225, the space in the recessed zone 10225 can be fully utilized, improving the space utilization rate of the battery 10 and making the structure of the battery 10 more compact and reliable. Moreover, the recessed zone 10225 restricts displacement of the buffer pad 104, which can ensure the buffering effect of the buffer pad 104 on the battery cell 102 and improve the reliability of the battery cell 102. An embodiment of this application provides an electric device, including the battery 10 provided in any one of the foregoing embodiments. The electric device may be any one of the foregoing devices using the battery 10. As the electric device includes the battery 10, the electric device also has the advantage of long service life.

FIG. 18 is a schematic block diagram of a manufacturing device 02 of battery cell 102 according to some embodiments of this application. Refer to FIG. 18. This embodiment of this application further provides a manufacturing device 02 of battery cell 102. The manufacturing device 02 includes a first providing apparatus 21, a second providing apparatus 22, and an assembly apparatus 24. The first providing apparatus 21 is configured to provide a housing 1022. The housing 1022 includes an opening part 10223 and a body part 10224. The opening part 10223 surrounds the opening 10221, and the body part 10224 surrounds the chamber 10222. At least a partial region of the body part 10224 is recessed relative to the opening part 10223 to form a recessed zone 10225, a thickness of the recessed zone 10225 being less than that of the opening part 10223. The second providing apparatus 22 is configured to provide a cover 1021. Two covers 1021 are provided and one of the two covers 1021 is provided with a positive electrode terminal 1023, and the other of the two covers 1021 is provided with a negative electrode terminal 1024. The third providing apparatus 23 is configured to provide an electrode assembly 1026. The assembly apparatus 24 is configured to weld the two covers 1021 to the housing 1022, so that each cover 1021 is connected to an opening part 10223 and close the opening 10221 at a corresponding position. The assembly apparatus 24 is further configured to electrically connect the positive electrode tab 10261 of the electrode assembly 1026 to the positive electrode terminal 1023 and electrically connect the negative electrode tab of the electrode assembly 1026 to the negative electrode terminal 1024. The battery cell 102 with high reliability, long service life and high space utilization rate can be quickly prepared and assembled using the manufacturing device 02.

## Claims

1. A battery cell (102), comprising:
a housing (1022), wherein the housing (1022) is provided with an opening (10221) and a chamber (10222); and the housing (1022) comprises an opening part (10223) and a body part (10224), the opening part (10223) surrounding the opening (10221) and the body part (10224) surrounding the chamber (10222); and
a cover (1021) connected to the opening part (10223) and closing the opening (10221); wherein
at least a partial region of the body part (10224) is recessed relative to the opening part (10223) to form a recessed zone (10225), a thickness of the recessed zone (10225) being less than that of the opening part (10223);
wherein the recessed zone (10225) is in arc transition connection with a region adjacent to the recessed zone (10225),
**characterized in that**:
a ratio of a size of the portion of the arc transition connection in the length direction of the housing (1022) to a size of the recessed zone (10225) in the length direction of the housing (1022) is (0.5-5):100;
a ratio of the thickness of the opening part (10223) to the thickness of the recessed zone (10225) is (65-100):1; and
a ratio of a size of the opening part (10223) in a length direction of the housing (1022) in a total size of the housing (1022) in the length direction is 1:(50-100).

2. The battery cell (102) according to claim 1, wherein at least a partial region of the opening part (10223) is thickened relative to the body part (10224) to form the recessed zone (10225); or
at least a partial region of the body part (10224) is thinned relative to the opening part (10223) to form the recessed zone (10225).

3. The battery cell (102) according to claim 1 or 2, wherein the recessed zone (10225) is located on an inner side of the body part (10224) adjacent to the chamber (10222) and recessed in a direction facing away from the chamber (10222); or
the recessed zone (10225) is located on an outer side of the body part (10224) farther away from the chamber (10222) and recessed in a direction approaching the chamber (10222).

4. The battery cell (102) according to claim 3, wherein the recessed zone (10225) is located on an inner side of the body part (10224) adjacent to the chamber (10222) and recessed in a direction facing away from the chamber (10222); and
the battery cell (102) further comprises an electrode assembly (1026) arranged in the chamber (10222), and part of the electrode assembly (1026) is accommodated in the recessed zone (10225).

5. The battery cell (102) according to any one of claims 1 to 4, wherein the housing (1022) is a cylindrical structure with the opening (10221) at one end; or
the housing (1022) is a cylindrical structure with the openings (10221) at two ends, and the battery cell (102) comprises two covers (1021), the two covers (1021) being connected to the two opening parts (10223) and closing the corresponding openings (10221), respectively; or
the housing (1022) is a prismatic structure with the opening (10221) at one end; or
the housing (1022) is a prismatic structure with the openings (10221) at two ends, and the battery cell (102) comprises two covers (1021), the two covers (1021) being connected to the two opening parts (10223) and closing the corresponding openings (10221), respectively.

6. The battery cell (102) according to any one of claims 1 to 5, wherein the housing (1022) comprises a first side plate (10226), a second side plate (10227), a third side plate (10228), and a fourth side plate (10229) that are connected head to tail in sequence, wherein the first side plate (10226) is parallel to and spaced apart from the third side plate (10228), the second side plate (10227) is parallel to and spaced apart from the fourth side plate (10229), middle regions of the first side plate (10226), the second side plate (10227), the third side plate (10228), and the fourth side plate (10229) jointly form the body part (10224), and end regions of the first side plate (10226), the second side plate (10227), the third side plate (10228), and the fourth side plate (10229) jointly form the two opening parts (10223); and the battery cell (102) comprises the two covers (1021), the two covers (1021) being connected to the two opening parts (10223) and closing the corresponding openings (10221), respectively; and
areas of the first side plate (10226) and the third side plate (10228) are greater than those of the second side plate (10227) and the fourth side plate (10229); and regions of the first side plate (10226) and the third side plate (10228) for forming the body part (10224) are integrally recessed relative to the opening part (10223) to form one recessed zone (10225), respectively.

7. The battery cell (102) according to claim 6, wherein regions of the second side plate (10227) and the fourth side plate (10229) for forming the body part (10224) are integrally recessed relative to the opening part (10223) to form one recessed zone (10225), respectively.

8. The battery cell (102) according to claim 7, wherein four recessed zones (10225) on the first side plate (10226), the second side plate (10227), the third side plate (10228) and the fourth side plate (10229) are in communication.

9. The battery cell (102) according to claim 7 or claim 8, wherein four recessed zones (10225) on the first side plate (10226), the second side plate (10227), the third side plate (10228), and the fourth side plate (10229) are all located on outer sides of the body part (10224) farther away from the chamber (10222).

10. The battery cell (102) according to any one of claims 1 to 9, wherein two openings (10221) are formed at two ends of the housing (1022), and the battery cell (102) comprises two covers (1021), the two covers (1021) being connected to the two opening parts (10223) and closing the corresponding openings (10221), respectively; and
the two covers (1021) are both welded to the housing (1022), and one of the two covers (1021) is provided with a positive electrode terminal (1023), and the other of the two covers (1021) is provided with a negative electrode terminal (1024); or either one of the two covers (1021) is welded to the housing (1022) and provided with a positive electrode terminal (1023) and a negative electrode terminal (1024), and the other one of the two covers (1021) is integrally formed with the housing (1022); and
the battery cell (102) further comprises an electrode assembly (1026) arranged in the chamber (10222), wherein a positive electrode tab (10261) of the electrode assembly (1026) is electrically connected to the positive electrode terminal (1023), and a negative electrode tab of the electrode assembly (1026) is electrically connected to the negative electrode terminal (1024).

11. A battery (10), comprising:
a box (101); and
the battery cell (102) according to any one of claims 1 to 10, wherein the battery cell (102) is arranged in the box (101).

12. The battery (10) according to claim 11, wherein the battery (10) further comprises a separation component, wherein the separation component is configured to separate the battery cell (102) from other members adjacent to the battery cell (102); and at least part of the separation component is accommodated in the recessed zone (10225).

13. The battery (10) according to claim 12, wherein the battery (10) comprises a plurality of battery cells (102) arranged sequentially in the box (101), wherein the recessed zone (10225) of the battery cell (102) is located on an outer side of the body part (10224) farther away from the chamber (10222) and is recessed in a direction approaching the chamber (10222); and the recessed zone (10225) of one of two adjacent battery cells (102) faces the other of the battery cells (102); and
the separation component is located between two adjacent battery cells (102), and at least part of the separation component for separating the two battery cells (102) is accommodated in the recessed zone (10225)optionally, wherein the recessed zones (10225) of any two adjacent battery cells (102) communicate with each other to form an accommodating chamber; and the separation component is accommodated in the accommodating chamber.

14. The battery (10) according to claim 12 or 13, wherein the separation component comprises at least one of a buffer pad (104), a reinforcing member, and a thermal management component (103).

15. An electric device, comprising the battery cell (102) according to any one of claims 1 to 10 or the battery (10) according to any one of claims 11 to 14.

## Patentansprüche

1. Batteriezelle (102), umfassend:
ein Gehäuse (1022), wobei das Gehäuse (1022) mit einer Öffnung (10221) und einer Kammer (10222) versehen ist; und das Gehäuse (1022) einen Öffnungsteil (10223) und einen Körperteil (10224) umfasst, wobei der Öffnungsteil (10223) die Öffnung (10221) umgibt und der Körperteil (10224) die Kammer (10222) umgibt; und
eine Abdeckung (1021), die mit dem Öffnungsteil (10223) verbunden ist und die Öffnung (10221) verschließt; wobei
mindestens eine Teilregion des Körperteils (10224) relativ zum Öffnungsteil (10223) vertieft ist, um eine vertiefte Zone (10225) zu bilden, wobei eine Dicke der vertieften Zone (10225) geringer ist als die des Öffnungsteils (10223);
wobei die vertiefte Zone (10225) in Bogenübergangsverbindung mit einer Region, die an die vertiefte Zone (10225) angrenzt, steht,
**dadurch gekennzeichnet, dass**:
ein Verhältnis einer Größe des Abschnitts der Bogenübergangsverbindung in der Längenrichtung des Gehäuses (1022) zur Größe der vertieften Zone (10225) in der Längenrichtung des Gehäuses (1022) (0,5-5):100 beträgt;
ein Verhältnis der Dicke des Öffnungsteils (10223) zur Dicke der vertieften Zone (10225) (65-100):1 beträgt; und
ein Verhältnis der Größe des Öffnungsteils (10223) in einer Längenrichtung des Gehäuses (1022) in einer Gesamtgröße des Gehäuses (1022) in der Längenrichtung 1:(50-100) beträgt.

2. Batteriezelle (102) nach Anspruch 1, wobei mindestens eine Teilregion des Öffnungsteils (10223) relativ zum Körperteil (10224) verdickt ist, um die vertiefte Zone (10225) zu bilden; oder
mindestens eine Teilregion des Körperteils (10224) relativ zum Öffnungsteil (10223) verdünnt ist, um die vertiefte Zone (10225) zu bilden.

3. Batteriezelle (102) nach Anspruch 1 oder 2, wobei sich die vertiefte Zone (10225) auf einer Innenseite des Körperteils (10224) befindet, die an die Kammer (10222) angrenzt, und in einer Richtung, die von der Kammer (10222) wegweist, vertieft ist; oder
sich die vertiefte Zone (10225) an einer Außenseite des Körperteils (10224) befindet, die weiter von der Kammer (10222) entfernt ist, und in einer Richtung der Kammer (10222) vertieft ist.

4. Batteriezelle (102) nach Anspruch 3, wobei sich die vertiefte Zone (10225) an einer Innenseite des Körperteils (10224) befindet, die an die Kammer (10222) angrenzt, und in einer Richtung, die von der Kammer (10222) wegweist, vertieft ist; und
die Batteriezelle (102) ferner eine Elektrodenanordnung (1026) umfasst, die in der Kammer (10222) angeordnet ist, und ein Teil der Elektrodenanordnung (1026) in der vertieften Zone (10225) untergebracht ist.

5. Batteriezelle (102) nach einem der Ansprüche 1 bis 4, wobei das Gehäuse (1022) eine zylindrische Struktur mit der Öffnung (10221) an einem Ende ist; oder
das Gehäuse (1022) eine zylindrische Struktur mit den Öffnungen (10221) an zwei Enden ist und die Batteriezelle (102) zwei Abdeckungen umfasst (1021), wobei die beiden Abdeckungen (1021) mit den beiden Öffnungsteilen (10223) verbunden sind und jeweils die entsprechenden Öffnungen (10221) verschließen; oder
das Gehäuse (1022) eine prismatische Struktur mit der Öffnung (10221) an einem Ende ist; oder
das Gehäuse (1022) eine prismatische Struktur mit den Öffnungen (10221) an zwei Enden ist und die Batteriezelle (102) zwei Abdeckungen umfasst (1021), wobei die beiden Abdeckungen (1021) mit den beiden Öffnungsteilen (10223) verbunden sind und jeweils die entsprechenden Öffnungen (10221) verschließen.

6. Batteriezelle (102) nach einem der Ansprüche 1 bis 5, wobei das Gehäuse (1022) eine erste Seitenplatte (10226), eine zweite Seitenplatte (10227), eine dritte Seitenplatte (10228) und eine vierte Seitenplatte (10229) umfasst, die nacheinander Kopf an Schwanz miteinander verbunden sind, wobei die erste Seitenplatte (10226) parallel zur dritten Seitenplatte (10228) verläuft und von dieser beabstandet ist, die zweite Seitenplatte (10227) parallel zur vierten Seitenplatte (10229) verläuft und von dieser beabstandet ist, Mittelregionen der ersten Seitenplatte (10226), der zweiten Seitenplatte (10227), der dritten Seitenplatte (10228) und der vierten Seitenplatte (10229) gemeinsam den Körperteil (10224) bilden und Endregionen der ersten Seitenplatte (10226), der zweiten Seitenplatte (10227), der dritten Seitenplatte (10228) und der vierten Seitenplatte (10229) gemeinsam die beiden Öffnungsteile (10223) bilden; und die Batteriezelle (102) die beiden Abdeckungen (1021) umfasst, wobei die beiden Abdeckungen (1021) mit den beiden Öffnungsteilen (10223) verbunden sind und jeweils die entsprechenden Öffnungen (10221) verschließen; und
Bereiche der ersten Seitenplatte (10226) und der dritten Seitenplatte (10228) größer sind als die der zweiten Seitenplatte (10227) und der vierten Seitenplatte (10229); und Regionen der ersten Seitenplatte (10226) und der dritten Seitenplatte (10228) zum Bilden des Körperteils (10224) jeweils einstückig gegenüber dem Öffnungsteil (10223) vertieft sind, um jeweils eine vertiefte Zone (10225) zu bilden.

7. Batteriezelle (102) nach Anspruch 6, wobei Regionen der zweiten Seitenplatte (10227) und der vierten Seitenplatte (10229) zum Bilden des Körperteils (10224) jeweils einstückig relativ zum Öffnungsteil (10223) vertieft sind, um jeweils eine vertiefte Zone (10225) zu bilden.

8. Batteriezelle (102) nach Anspruch 7, wobei vier vertiefte Zonen (10225) an der ersten Seitenplatte (10226), der zweiten Seitenplatte (10227), der dritten Seitenplatte (10228) und der vierten Seitenplatte (10229) miteinander in Verbindung stehen.

9. Batteriezelle (102) nach Anspruch 7 oder Anspruch 8, wobei vier vertiefte Zonen (10225) an der ersten Seitenplatte (10226), der zweiten Seitenplatte (10227), der dritten Seitenplatte (10228) und der vierten Seitenplatte (10229) sich alle an Außenseiten des Körperteils (10224) befinden, die weiter von der Kammer (10222) entfernt sind.

10. Batteriezelle (102) nach einem der Ansprüche 1 bis 9, wobei zwei Öffnungen (10221) an zwei Enden des Gehäuses (1022) gebildet sind und die Batteriezelle (102) zwei Abdeckungen (1021) umfasst, wobei die beiden Abdeckungen (1021) mit den beiden Öffnungsteilen (10223) verbunden sind und jeweils die entsprechenden Öffnungen (10221) verschließen; und
die beiden Abdeckungen (1021) beide mit dem Gehäuse (1022) verschweißt sind, und eine der beiden Abdeckungen (1021) mit einem positiven Elektrodenanschluss (1023) versehen ist, und die andere der beiden Abdeckungen (1021) mit einem negativen Elektrodenanschluss (1024) versehen ist; oder eine der beiden Abdeckungen (1021) mit dem Gehäuse (1022) verschweißt ist und mit einem positiven Elektrodenanschluss (1023) sowie einem negativen Elektrodenanschluss (1024) versehen ist, und die andere der beiden Abdeckungen (1021) einstückig mit dem Gehäuse (1022) gebildet ist; und
die Batteriezelle (102) ferner eine Elektrodenanordnung (1026) umfasst, die in der Kammer (10222) angeordnet ist, wobei eine positive Elektrodenlasche (10261) der Elektrodenanordnung (1026) elektrisch mit dem positiven Elektrodenanschluss (1023) verbunden ist und eine negative Elektrodenlasche der Elektrodenanordnung (1026) elektrisch mit dem negativen Elektrodenanschluss (1024) verbunden ist.

11. Batterie (10), umfassend:
einen Kasten (101); und
die Batteriezelle (102) nach einem der Ansprüche 1 bis 10, wobei die Batteriezelle (102) in dem Kasten (101) angeordnet ist.

12. Batterie (10) nach Anspruch 11, wobei die Batterie (10) ferner eine Trennkomponente umfasst, wobei die Trennkomponente konfiguriert ist, um die Batteriezelle (102) von anderen an die Batteriezelle (102) angrenzenden Elementen zu trennen; und wobei mindestens ein Teil der Trennkomponente in der vertieften Zone (10225) untergebracht ist.

13. Batterie (10) nach Anspruch 12, wobei die Batterie (10) eine Vielzahl von Batteriezellen (102) umfasst, die nacheinander im Kasten (101) angeordnet sind, wobei sich die vertiefte Zone (10225) der Batteriezelle (102) an der Außenseite des Körperteils (10224) befindet, die weiter von der Kammer (10222) entfernt ist, und in Richtung der Kammer (10222) vertieft ist; und die vertiefte Zone (10225) einer von zwei angrenzenden Batteriezellen (102) der anderen der Batteriezellen (102) zugewandt ist; und
sich die Trennkomponente zwischen zwei angrenzenden Batteriezellen (102) befindet, und mindestens ein Teil der Trennkomponente zum Trennen der beiden Batteriezellen (102) in der vertieften Zone (10225) untergebracht ist, wobei optional die vertieften Zonen (10225) beliebiger zweier angrenzender Batteriezellen (102) miteinander in Verbindung stehen, um eine Aufnahmekammer zu bilden; und die Trennkomponente in der Aufnahmekammer untergebracht ist.

14. Batterie (10) nach Anspruch 12 oder 13, wobei die Trennkomponente mindestens eines von einem Pufferpad (104), einem Verstärkungselement und einer Wärmemanagementkomponente (103) umfasst.

15. Elektrische Vorrichtung, umfassend die Batteriezelle (102) nach einem der Ansprüche 1 bis 10 oder die Batterie (10) nach einem der Ansprüche 11 bis 14.

## Revendications

1. Cellule de batterie (102), comprenant :
un logement (1022), dans laquelle le logement (1022) est doté d'une ouverture (10221) et d'une chambre (10222) ; et le logement (1022) comprend une partie d'ouverture (10223) et une partie corps (10224), la partie d'ouverture (10223) entourant l'ouverture (10221) et la partie corps (10224) entourant la chambre (10222) ; et
un couvercle (1021) relié à la partie d'ouverture (10223) et fermant l'ouverture (10221) ; dans lequel
au moins une région partielle de la partie corps (10224) est évidée par rapport à la partie d'ouverture (10223) pour former une zone évidée (10225), une épaisseur de la zone évidée (10225) étant inférieure à celle de la partie d'ouverture (10223) ;
dans laquelle la zone évidée (10225) est dans une liaison de transition en arc avec une région adjacente à la zone évidée (10225),
**caractérisée en ce que** :
un rapport d'une taille de la partie de la liaison de transition en arc dans la direction longitudinale du logement (1022) sur une taille de la zone évidée (10225) dans la direction longitudinale du logement (1022) est de (0,5-5):100 ;
un rapport de l'épaisseur de la partie d'ouverture (10223) à l'épaisseur de la zone évidée (10225) est de (65-100):1 ; et
un rapport d'une taille de la partie d'ouverture (10223) dans une direction longitudinale du logement (1022) à une taille totale du logement (1022) dans la direction longitudinale est de 1:(50-100).

2. Cellule de batterie (102) selon la revendication 1, dans laquelle au moins une région partielle de la partie d'ouverture (10223) est épaissie par rapport à la partie corps (10224) pour former la zone évidée (10225) ; ou
au moins une région partielle de la partie corps (10224) est amincie par rapport à la partie d'ouverture (10223) pour former la zone évidée (10225).

3. Cellule de batterie (102) selon la revendication 1 ou 2, dans laquelle la zone évidée (10225) est située sur un côté interne de la partie corps (10224) adjacente à la chambre (10222) et évidée dans une direction orientée à l'opposé de la chambre (10222) ; ou
la zone évidée (10225) est située sur un côté externe de la partie corps (10224) la plus éloignée de la chambre (10222) et évidée dans une direction s'approchant de la chambre (10222).

4. Cellule de batterie (102) selon la revendication 3, dans laquelle la zone évidée (10225) est située sur un côté interne de la partie corps (10224) adjacente à la chambre (10222) et évidée dans une direction orientée à l'opposé de la chambre (10222) ; et
la cellule de batterie (102) comprend en outre un ensemble électrode (1026) agencé dans la chambre (10222), et une partie de l'ensemble électrode (1026) est reçue dans la zone évidée (10225).

5. Cellule de batterie (102) selon l'une quelconque des revendications 1 à 4, dans laquelle le logement (1022) est une structure cylindrique avec l'ouverture (10221) au niveau d'une extrémité ; ou
le logement (1022) est une structure cylindrique avec les ouvertures (10221) au niveau de deux extrémités, et la cellule de batterie (102) comprend deux couvercles (1021), les deux couvercles (1021) étant reliés aux deux parties d'ouverture (10223) et fermant les ouvertures correspondantes (10221), respectivement ; ou
le logement (1022) est une structure prismatique avec l'ouverture (10221) au niveau d'une extrémité ; ou
le logement (1022) est une structure prismatique avec les ouvertures (10221) au niveau de deux extrémités, et la cellule de batterie (102) comprend deux couvercles (1021) les deux couvercles (1021) étant reliés aux deux parties d'ouverture (10223) et fermant les ouvertures correspondantes (10221), respectivement.

6. Cellule de batterie (102) selon l'une quelconque des revendications 1 à 5, dans laquelle le logement (1022) comprend une première plaque latérale (10226), une deuxième plaque latérale (10227), une troisième plaque latérale (10228), et une quatrième plaque latérale (10229) qui sont reliées selon une configuration tête à queue en séquence, dans laquelle la première plaque latérale (10226) est parallèle à et espacée de la troisième plaque latérale (10228), la deuxième plaque latérale (10227) est parallèle à et espacée de la quatrième plaque latérale (10229), des régions intermédiaires de la première plaque latérale (10226), de la deuxième plaque latérale (10227), de la troisième plaque latérale (10228), et de la quatrième plaque latérale (10229) forment conjointement la partie corps (10224), et des régions d'extrémité de la première plaque latérale (10226), de la deuxième plaque latérale (10227), de la troisième plaque latérale (10228), et de la quatrième plaque latérale (10229) forment conjointement les deux parties d'ouverture (10223) ; et la cellule de batterie (102) comprend les deux couvercles (1021), les deux couvercles (1021) étant reliés aux deux parties d'ouverture (10223) et fermant les ouvertures correspondantes (10221), respectivement ; et
des zones de la première plaque latérale (10226) et de la troisième plaque latérale (10228) sont supérieures à celles de la deuxième plaque latérale (10227) et de la quatrième plaque latérale (10229) ; et des régions de la première plaque latérale (10226) et de la troisième plaque latérale (10228) permettant de former la partie corps (10224) sont évidées d'un seul tenant par rapport à la partie d'ouverture (10223) pour former une zone évidée (10225), respectivement.

7. Cellule de batterie (102) selon la revendication 6, dans laquelle des régions de la deuxième plaque latérale (10227) et de la quatrième plaque latérale (10229) permettant de former la partie corps (10224) sont évidées d'un seul tenant par rapport à la partie d'ouverture (10223) pour former une zone évidée (10225), respectivement.

8. Cellule de batterie (102) selon la revendication 7, dans laquelle quatre zones évidées (10225) sur la première plaque latérale (10226), la deuxième plaque latérale (10227), la troisième plaque latérale (10228) et la quatrième plaque latérale (10229) sont en communication.

9. Cellule de batterie (102) selon la revendication 7 ou 8, dans laquelle quatre zones évidées (10225) sur la première plaque latérale (10226), la deuxième plaque latérale (10227), la troisième plaque latérale (10228), et la quatrième plaque latérale (10229) sont toutes situées sur des côtés externes de la partie corps (10224) la plus éloignée de la chambre (10222).

10. Cellule de batterie (102) selon l'une quelconque des revendications 1 à 9, dans laquelle deux ouvertures (10221) sont formées au niveau de deux extrémités du logement (1022), et la cellule de batterie (102) comprend deux couvercles (1021), les deux couvercles (1021) étant reliés aux deux parties d'ouverture (10223) et fermant les ouvertures correspondantes (10221), respectivement ; et
les deux couvercles (1021) sont tous deux soudés au logement (1022), et l'un des deux couvercles (1021) est doté d'une borne d'électrode positive (1023), et l'autre des deux couvercles (1021) est doté d'une borne d'électrode négative (1024) ; ou l'un ou l'autre des deux couvercles (1021) est soudé au logement (1022) et doté d'une borne d'électrode positive (1023) et d'une borne d'électrode négative (1024), et l'autre des deux couvercles (1021) est formé d'un seul tenant avec le logement (1022) ; et
la cellule de batterie (102) comprend en outre un ensemble électrode (1026) agencé dans la chambre (10222), dans laquelle une languette d'électrode positive (10261) de l'ensemble électrode (1026) est électriquement connectée à la borne d'électrode positive (1023), et une languette d'électrode négative de l'ensemble électrode (1026) est électriquement connectée à la borne d'électrode négative (1024).

11. Batterie (10), comprenant :
une boîte (101) ; et
la cellule de batterie (102) selon l'une quelconque des revendications 1 à 10, dans laquelle la cellule de batterie (102) est agencée dans la boîte (101).

12. Batterie (10) selon la revendication 11, dans laquelle la batterie (10) comprend en outre un composant de séparation, dans laquelle le composant de séparation est configuré pour séparer la cellule de batterie (102) d'autres éléments adjacents à la cellule de batterie (102) ; et au moins une partie du composant de séparation est reçue dans la zone évidée (10225).

13. Batterie (10) selon la revendication 12, dans laquelle la batterie (10) comprend une pluralité de cellules de batterie (102) agencées séquentiellement dans la boîte (101), dans laquelle la zone évidée (10225) de la cellule de batterie (102) est située sur un côté externe de la partie corps (10224) la plus éloignée de la chambre (10222) et est évidée dans une direction s'approchant de la chambre (10222) ; et la zone évidée (10225) de l'une des deux cellules de batterie adjacentes (102) fait face à l'autre des cellules de batterie (102) ; et
le composant de séparation est situé entre deux cellules de batterie adjacentes (102), et au moins une partie du composant de séparation permettant de séparer les deux cellules de batterie (102) est reçue dans la zone évidée (10225) facultativement, dans laquelle les zones évidées (10225) de deux quelconques cellules de batterie adjacentes (102) communiquent entre elles pour former une chambre de réception ; et le composant de séparation est reçu dans la chambre de réception.

14. Batterie (10) selon la revendication 12 ou 13, dans laquelle le composant de séparation comprend au mois l'un(e) d'une languette tampon (104), d'un élément de renforcement, et d'un composant de gestion thermique (103).

15. Dispositif électrique, comprenant la cellule de batterie (102) selon l'une quelconque des revendications 1 à 10 ou la batterie (10) selon l'une quelconque des revendications 11 à 14.
